# EUROPÄISCHE PATENTSCHRIFT

(11) **EP 1 328 723 B1**
(45) Veröffentlichungstag und Bekanntmachung des Hinweises auf die Patenterteilung: **14.03.2007**
(21) Anmeldenummer: 01987846.1
(22) Anmeldetag: 19.10.2001
(51) Int. Cl.: F02M 61/16

(54) **BRENNSTOFFEINSPRITZVENTIL**
FUEL INJECTION VALVE
SOUPAPE D'INJECTION DE CARBURANT

(30) Priorität: 20.10.2000 DE 10052143
(43) Veröffentlichungstag der Anmeldung: 23.07.2003
(73) Patentinhaber: ROBERT BOSCH GMBH, 70442 Stuttgart (DE)
(72) Erfinder: DANTES, Guenter, 71735 Eberdingen (DE); NOWAK, Detlef, 74199 Untergruppenbach (DE); HEYSE, Joerg, 74354 Besigheim (DE)
(74) Vertreter: Körfer, Thomas
(86) Internationale Anmeldenummer: PCT/DE2001/003989
(87) Internationale Veröffentlichungsnummer: WO 2002/033247

(56) Entgegenhaltungen:
- DE-A- 19 815 795
- US-A- 4 423 843
- US-A- 4 685 432
- US-A- 5 108 037
- PATENT ABSTRACTS OF JAPAN vol. 1998, no. 09, 31. Juli 1998 (1998-07-31) & JP 10 103194 A (MITSUBISHI ELECTRIC CORP), 21. April 1998 (1998-04-21)

## Beschreibung

### Stand der Technik

Die Erfindung geht aus von einem Brennstoffeinspritzventil nach dem Oberbegriff des unabhängigen Anspruchs 1.

Aus der US 5 108 037 sind drallerzeugende Brennstoffeinspritzventile bekannt, bei denen zwei Strömungswege für den Brennstoff ausgebildet sind. Die Brennstoffströmung wird im Bereich des Ventilschließkörpers in zwei Komponenten aufgespaltet. Der eine Teil des Brennstoffs durchströmt in einer Drallscheibe angeordnete Drallkanäle. Die Brennstoffströmung wird dabei mit einer Umfangsgeschwindigkeit beaufschlagt, die zu einem Abspritzen des Brennstoffs auf einem Kegelmantel führt. Die Drallscheibe besitzt eine zentrale Bohrung, die zur Führung des Ventilschließkörpers verwendet wird. Der zwischen der Führungsbohrung und dem Ventilschließkörper ausgebildete Spalt wird gezielt genutzt, um einen Brennstoffleckagestrom zu ermöglichen, der ohne Drall in axialer Richtung durch die Führungsbohrung strömt. Stromaufwärts des Dichtsitzes treffen die drallbehaftete und die axiale Brennstoffströmung aufeinander. Die sich mischenden Brennstoffströmungen werden gemeinsam abgespritzt. Dadurch kann der Brennstoff nicht nur auf einem Kegelmantel, sondern als Vollkegel abgespritzt werden.

Aus der DE 198 15 795 A1 ist weiterhin ein Brennstoffeinspritzventil bekannt, bei dem ebenfalls zwei Strömungswege zur Erzeugung einer Bi-Flux-Strömung ausgebildet sind. Sie werden in einem gemeinsamen Bauteil erzeugt, das stromabwärts des Dichtsitzes eingesetzt ist. Das Bauteil wird in einem Mehrschichtverfahren hergestellt und in eine Ausnehmung am stromabwärtigen Ende des Brennstoffeinspritzventils eingesetzt. Der Brennstoffstrahl wird direkt aus dem drallerzeugenden Bauteil abgespritzt. In dem Bauteil erfolgt die Aufteilung der Brennstoffströmung in einen axialen und einen drallbehafteten Strömungsanteil. Der Axialanteil der Strömung wird der drallbehafteten Brennstoffströmung dabei exzentrisch wieder zugeführt, wodurch der Kegel auf dem der Brennstoff abgespritzt wird, gegen die Mittelachse des Brennstoffeinspritzventils geneigt wird.

Bei dem aus der US 5 108 037 bekannten Brennstoffeinspritzventil ist die Vergrößerung der Toleranz zwischen dem Ventilschließkörper und der Führungsbohrung von Nachteil. Sie ist erforderlich um einen ausreichenden Leckagestrom zur Erzeugung einer Axialströmung zu erreichen. Durch die Verwendung eines kugelförmigen Ventilschließkörpers und der damit verbundenen linienförmigen Drosselstelle sind unvermeidbare Schwankungen des Passmaßes mit starken Streuungen des axialen strömungsanteils verbunden. Dadurch erhöht sich die Ausschußquote bei der Herstellung des Brennstoffeinspritzventils.

Weiterhin nachteilig ist die durch das größere Radialspiel zwischen Ventilschließkörper und Führungsbohrung schlechtere Führung des Ventilschließkörpers. Der Ventilschließkörper wird während des Abspritzvorgangs von Brennstoff umströmt. Durch die Kugelgeometrie und das vergrößerte Spiel zwischen dem Ventilschließkörper und der Führungsbohrung wird die Neigung zum Schwingen erhöht. Das Flattern des Ventilschließkörpers hat wiederum einen größeren Verschleiß des Brennstoffeinspritzventils zur Folge.

Bei dem aus der DE 198 15 795 A1 bekannten Brennstoffeinspritzventil ist dagegen die Anordnung stromabwärts des Dichtsitzes nachteilig. Dadurch kann es leicht zur einer Verkokung des drallerzeugenden Bauteils kommen. Eine zuverlässige und konstante Aufbereitung des abzuspritzenden Brennstoffs kann so nicht sichergestellt werden. Als Konsequenz verschlechtert sich die Zerstäubung und es kommt letztlich zu einer erhöhten Schadstoffbelastung durch die verschlechterte Verbrennung.

Der Brennstoffstrom wird stromabwärts des Dichtsitzes aufgespalten und wieder vereint. Eine Veränderung des axialen Anteils der Brennstoffströmung kann daher während des Öffnens und Schließens nicht vorgenommen werden.

Das mehrschichtig aufgebaute Drallelement erfordert darüber hinaus ein aufwendiges Herstellverfahren und muß aufgrund der asymmetrischen Anordnung des axialen Strömungskanals orientiert in das Brennstoffeinspritzventil eingesetzt werden. Dadurch erhöhen sich die Fertigungskosten für das Brennstoffeinspritzventil.

Aus der US 4,685,432 ist ein Verfahren und eine Vorrichtung zur Gemischbildung für ein direkt einspritzendes Ventil einer Verbrennungsmaschine bekannt. Die Verbrennungsmaschine umfasst einen Kolben mit einer Aussparung, die einen Bereich für die Verbrennung bildet. Ferner sind in der Verbrennungsmaschine Lufteinlassvorrichtungen mit Verwirbelungselementen vorgesehen, wobei die Lufteinlassvorrichtungen die eingelassene Luft in den Brennraum leiten. Des weiteren ist eine Einspritzdüse vorgesehen, die periodisch einspritzt, wobei diese Einspritzdüse zumindest eine Tangentialkanal aufweist, um Brennstoff zu verwirbeln, der durch eine Brennstoffzufuhr in den Brennraum geleitet wird. Dabei wird eine kegelförmige Brennstoffwolke gebildet, die dem eingelassenen Luftwirbel zugeführt wird und mit diesem ein Gemisch gebildet. Ein Schritt des Verfahrens umfasst den Einlass von verwirbelter Luft in den Brennraum, wobei die verwirbelte Luft eine Geschwindigkeit hat, die in etwa der Verbrennungsgeschwindigkeit entspricht. Ein weiterer Schritt bezieht sich darauf, dass die Einspritzdüse Brennstoff abgibt, der innerhalb des Brennraums der verwirbelten Luft zugeführt wird, wobei der Einspritzwinkel in Abhängigkeit von der Geschwindigkeit der Verbrennungsmaschine variiert wird. Dadurch wird der Weg der kegelförmigen Brennstoffwolke zum Brennraum verändert, wobei der Brennstoff ohne an einer Wand abzufließen in den Brennraum gelangt.

Ein ähnlicher Stand der Technik geht aus der US 5,108,037 und der DE 198 15 795 A1 hervor.

### Vorteile der Erfindung

Demgegenüber hat das erfindungsgemäße Brennstoffeinspritzventil mit den Merkmalen des unabhängigen Anspruchs 1 den Vorteil, daß die Führung unverändert eng toleriert ist. Am Umfang des geführten Bauteils werden lediglich Teilbereiche zur Strömungsführung genutzt. Durch die gute Führung der Ventilnadel bzw. des Ventilschließkörpers wird der Verschleiß des Brennstoffeinspritzventils gering gehalten.

Durch die Größe der Abflachungen ist der Anteil der axialen Strömung leicht einzustellen. Insbesondere sind auch große axiale Strömungsanteile realisierbar, da dies nicht zu einer Verschlechterung der Führung der Ventilnadel bzw. des Ventilschießkörpers führt.

Durch die in dem abhängigen Anspruch aufgeführte Maßnahme ist eine vorteilhafte Weiterbildung des erfindungsgemäßen Brennstoffeinspritzventils möglich.

Die einfache Bildung von Varianten des Brennstoffeinspritzventils ist vorteilhaft. Eine individuelle Anpassung an die speziellen Erfordernisse einer vorgesehenen Brennkraftmaschine kann unter Beibehaltung eines Großteils der Bauteile durchgeführt werden.

### Zeichnung

Die Ausführungsform ist in der Zeichnung vereinfacht dargestellt und wird in der nachfolgenden Beschreibung näher erläutert. Es zeigen:
- Fig. 1: einen schematischen Teilschnitt durch ein Beispiel eines Brennstoffeinspritzventils;
- Fig. 2: einen schematischen Schnitt im Ausschnitt II der Fig. 1 durch das Beispiel eines Brennstoffeinspritzventils, wobei dieses Beispiel nicht Gegenstand der Ansprüche ist.
- Fig. 3: einen Schematischen, Schnitt entlang der Linie III-III der Fig. 2 des Beispiels; und
- Fig. 4: einen schematischen Teilschnitt im Ausschnitt II der Fig. 1 durch die Ausführungsform des erfindungsgemäßen Brennstoffeinspritzventils.

### Beschreibung der Ausführungsbeispiele

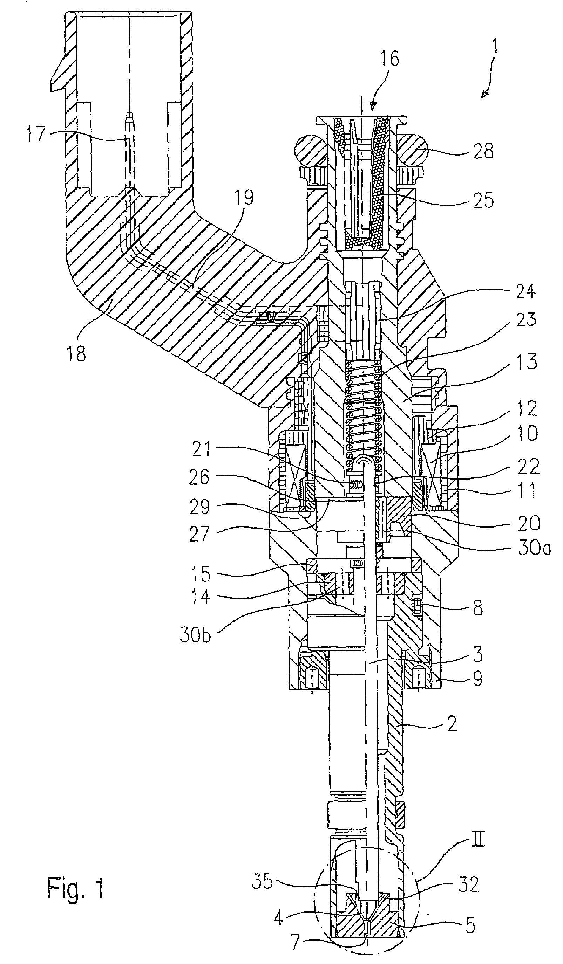

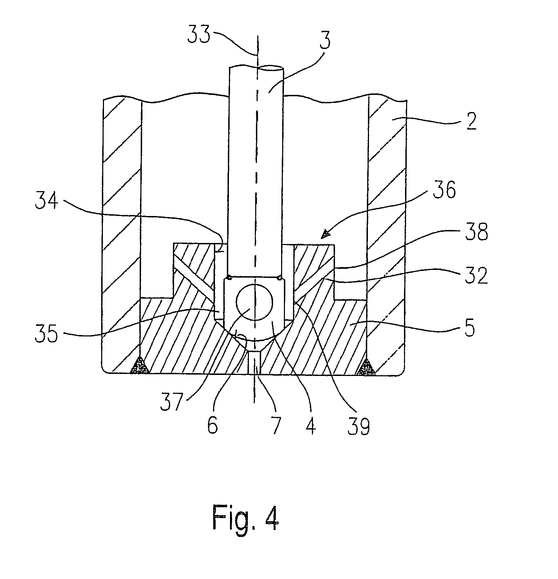

Bevor anhand der Fig. 4 die Ausführungsform des erfindungsgemäßen Brennstoffeinspritzventils 1 näher beschrieben wird, soll zum besseren Verständnis der Erfindung zunächst anhand von Fig. 1 das erfindungsgemäße Brennstoffeinspritzventil 1 in einer Gesamtdarstellung bezüglich seiner wesentlichen Bestandteile kurz erläutert werdend.

Das Brennstoffeinspritzventil 1 ist in der Form eines Brennstoffeinspritzventils 1 für Brennstoffeinspritzanlagen von gemischverdichtenden, fremdgezündeten Brennkraftmaschinen ausgeführt. Das Brennstoffeinspritzventil 1 eignet sich insbesondere zum direkten Einspritzen von Brennstoff in einen nicht dargestellten Brennraum einer Brennkraftmaschine.

Das Brennstoffeinspritzventil 1 umfaßt einen Düsenkörper 2, in welchem eine Ventilnadel 3 angeordnet ist. Die Ventilnadel 3 steht mit einem Ventilschließkörper 4 in Wirkverbindung, der mit einer auf einem Ventilsitzkörper 5 angeordneten Ventilsitzfläche 6 zu einem Dichtsitz zusammenwirkt. Bei dem Brennstoffeinspritzventil 1 handelt es sich im Ausführungsbeispiel um ein elektromagnetisch betätigtes Brennstoffeinspritzventil 1, welches über eine Abspritzöffnung 7 verfügt. Der Düsenkörper 2 ist durch eine Dichtung 8 gegen den Außenpol einer Magnetspule 10 abgedichtet. Die Magnetspule 10 ist einem Spulengehäuse 11 gekapselt und auf einen Spulenträger 12 gewickelt, welcher an einem Innenpol 13 der Magnetspule 10 anliegt. Der Innenpol 13 und der Außenpol 9 sind durch einen Spalt 26 voneinander getrennt und stützen sich auf einem Verbindungsbauteil 29 ab. Die Magnetspule 10 wird über eine Leitung 19 von einem über einen elektrischen Steckkontakt 17 zuführbaren elektrischen Strom erregt. Der Steckkontakt 17 ist von einer Kunststoffummantelung 18 umgeben, die am Innenpol 13 angespritzt sein kann.

Die Ventilnadel 3 ist in einer scheibenförmig ausgeführten Ventilnadelführung 14 geführt. Dieser ist eine Einstellscheibe 15 zugepaart, welche zur Einstellung des Ventilnadelhubes dient. Auf der stromaufwärtigen Seite der Einstellscheibe 15 befindet sich ein Anker 20. Dieser steht über einen Flansch 21 kraftschlüssig mit der Ventilnadel 3 in Verbindung, welche durch eine Schweißnaht 22 mit dem Flansch 21 verbunden ist. Auf dem Flansch 21 stützt sich eine Rückstellfeder 23 ab, welche in der vorliegenden Bauform des Brennstoffeinspritzventils 1 durch eine in den Innenpol 13 eingepreßte Hülse 24 auf Vorspannung gebracht wird.

In der Ventilnadelführung 14 und im Anker 20 verlaufen Brennstoffkanäle 30a, 30b. In einer zentralen Brennstoffzufuhr 16 ist ein Filterelement 25 angeordnet. Das Brennstoffeinspritzventil 1 ist durch eine Dichtung 28 gegen eine nicht dargestellte Brennstoffleitung abgedichtet.

Im Ruhezustand des Brennstoffeinspritzventils 1 wird der Anker 20 über den Flansch 21 an der Ventilnadel 3 von der Rückstellfeder 23 entgegen seiner Hubrichtung so beaufschlagt, daß der Ventilschließkörper 4 an der Ventilsitzfläche 6 in dichtender Anlage gehalten wird. Bei Erregung der Magnetspule 10, baut diese ein Magnetfeld auf, welches den Anker 20 entgegen der Federkraft der Rückstellfeder 23 in Hubrichtung bewegt, wobei der Hub durch einen in der Ruhestellung zwischen dem Innenpol 13 und dem Anker 20 befindlichen Arbeitsspalt 27 vorgegeben ist. Der Anker 20 nimmt den Flansch 21, welcher mit der Ventilnadel 2 verschweißt ist, und damit die Ventilnadel 3 ebenfalls in Hubrichtung mit. Der mit der Ventilnadel 3 in Wirkverbindung stehende Ventilschließkörper 4 hebt von der Ventilsitzfläche 6 ab, und der über Drallkanäle 32 und einen Axialkanal 35 zu der Abspritzöffnung 7 gelangende Brennstoff wird abgespritzt.

Wird der Spulenstrom abgeschaltet, fällt der Anker 20 nach genügendem Abbau des Magnetfeldes durch den Druck der Rückstellfeder 23 auf den Flansch 21 vom Innenpol 13 ab, wodurch sich die Ventilnadel 3 entgegen der Hubrichtung bewegt. Dadurch setzt der Ventilschließkörper 4 auf der Ventilsitzfläche 6 auf, und das Brennstoffeinspritzventil 1 wird geschlossen.

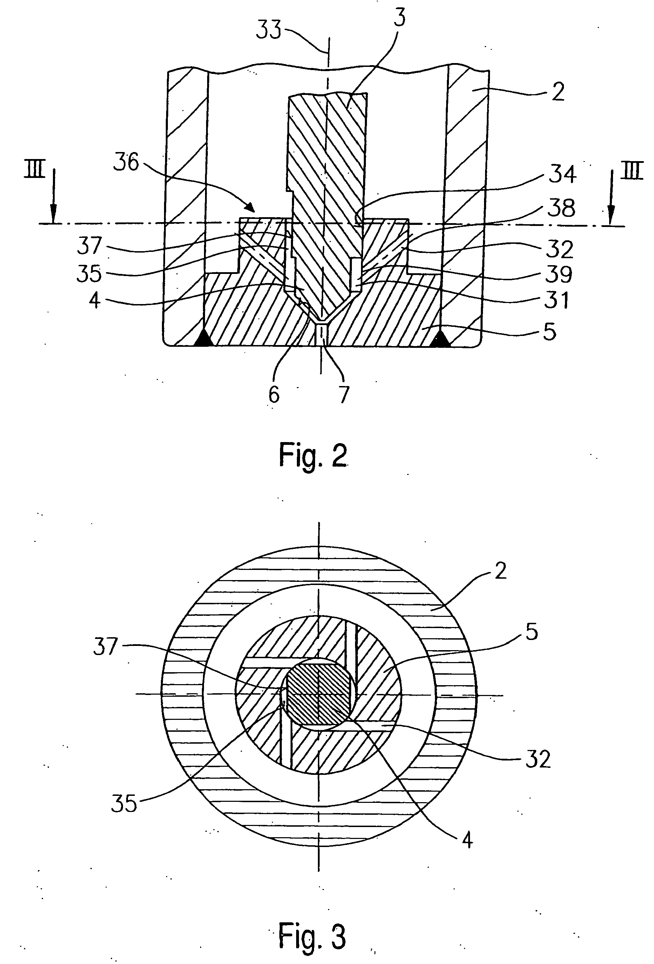

In Fig. 2 ist ein Beispiel, welches nicht Gegenstand der Ansprüche ist, mit einer einstückigen Ausführung von Drallerzeugung und Ventilsitz dargestellt. In den Ventilsitzkörper 5 ist eine zentral angeordnete Führungsausnehmung 34 eingebracht, an deren stromabwärtigem Ende eine Ventilsitzfläche 6 angeordnet ist. Stromabwärts der Ventilsitzfläche 6 schließt sich die Abspritzöffnung 7 an. Der Ventilsitzkörper 5 weist an seiner stromaufwärtigen Seite eine zylinderförmige Verlängerung 36 auf, deren radiale Ausdehnung kleiner ist, als die innere radiale Ausdehnung des rohrförmigen Düsenkörpers 2. In die zylinderförmige Verlängerung 36 des Ventilsitzkörpers 5 sind Drallkanäle 32 eingebracht, deren Einlaßöffnung 38 in dem mit Brennstoff bedrückten Zwischenraum zwischen der zylinderförmigen Verlängerung 36 des Ventilsitzkörpers 5 und dem Düsenkörper 2 angeordnet ist. Die Drallkanäle 32 weisen eine Tangentialkomponente gegenüber der Längsachse 33 des Brennstoffeinspritzventils 1 auf, durch die der durch die Drallkanäle 32 strömende Brennstoff eine Umfangsgeschwindigkeit erhält, und münden stromaufwärts der Ventilsitzfläche 6 in die Führungsausnehmung 34 aus. Neben der Tangentialkomponente können die Drallkanäle 32 auch eine Axialkomponente aufweisen.

Die Herstellung des Ventilsitzkörpers 5 und das Einbringen der Drallkanäle 32 erfolgt z. B. durch Laserbohren, konventionellem Bohren, Erodieren, Sintern oder Prägen. Die Tolerierung der Drallkanäle 32 kann dabei relativ grob sein, da sie keinen Einfluß auf die Zumessung des abgespritzten Brennstoffs hat. Bezüglich der Anzahl der zu montierenden Bauteile hat die einstückige Ausführung der Drallerzeugung Vorteile, sie kann aber ebenso als mehrteilige Baugruppe ausgeführt werden. Denkbar ist z. B. ein Ventilsitzkörper 5, der die Abspritzöffnung 7 und die Ventilsitzfläche 6 aufweist und stromaufwärts dessen eine Drallscheibe angeordnet ist, in welcher die Drallkanäle 32 und die Führungsausnehmung 34 eingebracht sind.

Die Ventilnadel 3 und der Ventilschließkörper 4 sind im dargestellten Beispiel einstückig ausgeführt. Die radiale Ausdehnung des Ventilschließkörpers 4 im Bereich der Ausmündung 39 der Drallkanäle 32 ist kleiner als die radiale Ausdehnung der Führungsausnehmung 34, so daß zwischen dem Ventilschließkörper 4 und der Führungsausnehmung 34 des Ventilsitzkörpers 5 ein Ringspalt 31 ausgebildet wird. Der Querschnitt des Ringspalts 31 bestimmt die Zumessung des abzuspritzenden Brennstoffs. Stromaufwärts des Ringspalts 31 weist die Ventilnadel 3 einen oder mehrere Abflachungen 37 auf, die zusammen mit der Führungsausnehmung 34 zu einem oder mehreren Axialkanälen 35 zusammenwirken und die z. B. in Form von Anschliffen hergestellt werden können. Die Axialkanäle 35 sind parallel zur Längsachse 33 des Brennstoffeinspritzventils 1. Die Führung der Ventilnadel 3 erfolgt in der Führungsausnehmung 34 durch die nicht abgeflachten Bereiche der Ventilnadel 3, dargestellt in Fig. 3.

Die Summe der Querschnitte der Drallkanäle 32 und der aus den Abflachungen 37 gebildeten Axialkanäle 35 ist größer als der Querschnitt des Ringspalts 31 zwischen Ventilschließkörper 4 und Führungsausnehmung 34, so daß die Ausbildung des Dralls der Brennstoffströmung von der Zumessung der Brennstoffmenge, die abgespritzt wird, entkoppelt ist. Die dadurch mögliche grobere Tolerierung des Querschnitts der Drallkanäle 32 führt zu einer Senkung der Produktionskosten.

In Fig. 3 ist die Orientierung der Drallkanäle 32 zu den Abflachungen 37 der Ventilnadel 3 dargestellt. Die Drallkanäle 32 und die Ventilnadel 3 sind zueinander so orientiert, daß bei geöffnetem Brennstoffeinspritzventil 1 die beiden Strömungsanteile direkt aufeinander treffen. Die Ausmündung der im dargestellten Beispiel vier Drallkanäle 32 liegt in stromabwärtiger Verlängerung der vier Axialkanäle 35.

Die erfindungsgemäße Ausführungsform ist in Fig. 4 dargestellt. Die Ventilnadel 3 und der Ventilschließkörper 4 sind zwei Bauteile, die beispielsweise durch Schweißen miteinander verbunden sind. Die Ventilnadel 3 weist dabei eine kleinere radiale Ausdehnung auf, als der vorzugsweise kugelförmige Ventilschließkörper 4. An dem Ventilschließkörper 4 sind ein oder mehrere Abflachungen 37 angeordnet, welche mit der Führungsausnehmung 34 zu Axialkanälen 35 zusammenwirken. Die nicht abgeflachten Bereiche dienen dabei zur Führung des Ventilschließkörpers 4.

Der Ventilsitzkörper 5 entspricht dem des oben erläuterten Beispiels aus Fig. 2, wobei dieses Beispiel nicht Gegenstand der Ansprüche ist. Die Drallkanäle 32 münden in die Axialkanäle 35 aus. Alternativ können die Drallkanäle 32 unmittelbar stromaufwärts der Ventilsitzfläche 6 ausmünden, so daß ihre Ausmündung bei geöffnetem Brennstoffeinspritzventil 1 stromabwärts der Axialkanäle 35 angeordnet ist. Dadurch ist es möglich, die Anzahl und Orientierung der Drallkanäle 32 und der Axialkanäle 35 unabhängig voneinander festzulegen.

## Patentansprüche

1. Brennstoffeinspritzventil (1) mit einer Ventilnadel (3) und einem damit in Wirkverbindung stehenden Ventilschließkörper (4), der mit einer in einem Ventilsitzkörper (5) angeordneten Ventilsitzfläche (6) zu einem Dichtsitz zusammenwirkt, wobei eine zylinderförmige Verlängerung des Ventilsitzkörpers oder eine Drallscheibe zumindest einen Drallkanal (32) aufweist, der stromaufwärts des Dichtsitzes gegenüber der Längsachse : (33) des Brennstoffeinspritzventils (1) eine Tangentialkomponente aufweist, und mit einem zwischen dem Ventilschließkörper (4) und einer Führungsausnehmung (34) des Ventilsitzkörpers (5) ausgebildeten Axialkanal (35), der gegenüber der Längsachse (33) des Brennstoffeinspritzventils (1) eine Axialkomponente aufweist,
**dadurch gekennzeichnet,**
**dass** der Axialkanal (35) zwischen der Führungsausnehmung (34) und zumindest einer Abflachung (37) an der Ventilnadel (3) oder an dem Ventilschließkörper (4) ausgebildet ist und
**dass** der zumindest einen Drallkanal (32) in den zwischen den Abflachungen (37) und der Führungsausnehmung (34) gebildeten Axialkanal (35) ausmündet.

2. Brennstoffeinspritzventil nach Anspruch 1,
**dadurch gekennzeichnet,**
**dass** der zumindest eine Drallkanal (32) neben der Tangentialkomponente auch eine Axialkomponente aufweist.

## Claims

1. Fuel injection valve (1) having a valve needle (3) and having a valve closing body (4) which is operatively connected thereto and interacts with a valve seat face (6), which is arranged in a valve seat body (5), to form a sealing seat, wherein a cylindrical extension of the valve seat body or a swirl plate has at least one swirl duct (32) which, upstream of the sealing seat, has a tangential component relative to the longitudinal axis (33) of the fuel injection valve (1), and having an axial duct (35) which is formed between the valve closing body (4) and a guide recess (34) of the valve seat body (5) and has an axial component relative to the longitudinal axis (33) of the fuel injection valve (1),
**characterized**
**in that** the axial duct (35) is formed between the guide recess (34) and at least one flattened portion (37) on the valve needle (3) or on the valve closing body (4), and in that the at least one swirl duct (32) opens out into the axial duct (35) formed between the flattened portions (37) and the guide recess (34).

2. Fuel injection valve according to Claim 1,
**characterized**
**in that** the at least one swirl duct (32) has an axial component in addition to the tangential component.

## Revendications

1. Injecteur de carburant (1) comprenant une aiguille de soupape (3) et un obturateur de soupape (4) en liaison active avec l'aiguille, et qui coopère avec une surface de siège de soupape (6) disposée dans un corps de siège de soupape (5) pour former un siège étanche, un prolongement cylindrique du corps de siège de soupape ou un disque à effet giratoire présentant au moins un canal tourbillonnaire (32) qui présente, en amont du siège étanche, par rapport à l'axe longitudinal (33) de l'injecteur de carburant (1), une composante tangentielle, et comprenant un canal axial (35) configuré entre l'obturateur de soupape (4) et un évidement de guidage (34) du corps de siège de soupape (5), qui présente par rapport à l'axe longitudinal (33) de l'injecteur de carburant (1) une composante axiale,
**caractérisé en ce que**
le canal axial (35) est configuré entre l'évidement de guidage (34) et au moins un méplat (37) sur l'aiguille de soupape (3) ou sur l'obturateur de soupape (4), et
au moins un canal tourbillonnaire (32) débouche dans le canal axial (35) configuré entre les méplats (37) et l'évidement de guidage (34).

2. Injecteur de carburant selon la revendication 1,
**caractérisé en ce qu'**
au moins un canal tourbillonnaire (32) présente, outre la composante tangentielle, également une composante axiale.
